# EUROPEAN PATENT SPECIFICATION

(11) **EP 4 110 042 B1**
(45) Date of publication and mention of the grant of the patent: **16.04.2025**
(21) Application number: 20731235.6
(22) Date of filing: 28.02.2020
(51) Int. Cl.: A01G 17/06

(54) **IMPROVED REVERSIBLE LOCKING ELEMENT OF A METAL WIRE ON A PLANT STAKE**
VERBESSERTES REVERSIBLES SPERRELEMENT EINES METALLDRAHTES AUF EINEM PFLANZENPFAHL
AMÉLIORATION DE L'ÉLÉMENT DE VERROUILLAGE RÉVERSIBLE D'UN FIL MÉTALLIQUE SUR UN TUTEUR DE PLANTE

(43) Date of publication of application: 04.01.2023
(73) Proprietor: Bortolussi, Claudio, 33080 Fiume Veneto (PN) (IT); Bortolussi, Franco, 33080 Fiume Veneto (PN) (IT)
(72) Inventor: Bortolussi, Claudio, 33080 Fiume Veneto (PN) (IT); Bortolussi, Franco, 33080 Fiume Veneto (PN) (IT)
(74) Representative: Giugni, Diego
(86) International application number: PCT/IT2020/000028
(87) International publication number: WO 2021/171325

(56) References cited:
- EP-A1- 1 911 346
- FR-A1- 2 902 604
- IT-A1- PN20 100 031

## Description

### TECHNICAL FIELD OF THE INVENTION

The present invention relates to a reversible locking element of a metal or plastic wire on a plant stake. The invention also relates to a system for orchards, preferably vineyards, comprising a plurality of said elements, as well as a method for supporting the branches of fruit plants comprising the construction of a support grid for said branches, wherein horizontal wires are reversibly locked on plant stakes by means of said element.

### PRIOR ART

In the agricultural cultivation sector, it is known to build systems for the support of fruit trees along rows. These systems generally consist of a vertical grid made up of a plurality of poles planted vertically in the ground connected to each other by means of movable or fixed wires stretched horizontally. Said poles are conventionally divided into head poles on which said wires are constrained, in a movable or fixed manner, and intermediate poles arranged in a row between said head poles so as to guide the wires. This grid has the fundamental function of supporting the branches, shoots or fruit end of the plants in order to support them during their growth and allow the best arrangement of both the leaves and the fruits in the sun, so as to obtain optimal cultivation conditions.

The supporting structure of the grid is then completed, especially in the case of vines, by stakes to support the portion of the woody trunk of the plant, that is, the portion that does not carry leaf branches. The stakes are substantially rigid and elongated elements that are planted in the ground next to the plant and may have a cylindrical, oval, quadrangular, triangular, T-shaped section, all substantially regular if the stake is of metal, plastic or other preformed material. Alternatively, in the case of wooden supports, the shapes may be similar to those specified but irregular.

One or more fixed metal wires are then stretched horizontally between said stakes and reversibly constrained to them, so as to allow the fruit end to be tied along said wires to support it during the growth of the branches that will bear leaves and fruits.

Different methods are generally used to connect vertical stakes in a stable and firm manner with fixed wires that extend horizontally.

A first of these methods requires the use of common sections of metal wire which is wrapped around the region in which each horizontal wire crosses each vertical stake, whereby each section of wire is then tightened and closed by means of clamps, pliers or tongs in order to keep the horizontal wire and the vertical stake firmly joined.

This method has the major drawback in that each individual application requires demanding manual work. If we take into due consideration the fact that the preparation of medium-sized agricultural surfaces requires the application of a few thousand of these sections of wire to be tied and connected to a corresponding number of vertical stakes, we understand the need to reduce to the maximum the work time required to tie said wire sections so as to connect each of said horizontal wires to said vertical stakes. Furthermore, this method has the well-known drawback that, since the section of metal wire is generally arranged oblique, that is, angled with respect to both the vertical stake and the horizontal wire in order to be able to wind them both, said section of wire allows a certain horizontal sliding of the horizontal wire with respect to its initial point of application on the stake; this well-known circumstance - and which is also rather undesired due to further problems well known by those skilled in the art - contributes to making this method not very applicable.

Another method requires the use of a specific accessory to tighten and lock the wire with a double clamp; all that is required to mount this accessory is to use a simple screwdriver as a lever. When this screwdriver is used as a lever to exert a lever action, the accessory indicated above is deformed, thereby locking the stake optimally and definitively on the wire. However, it has a main drawback not only in that the accessory itself cannot be reused in another application, but also - and this is certainly its most serious drawback - in that this accessory is rather bulky, i.e. this accessory requires a lot of horizontal space, so it may disturb or be a hindrance for vegetation, or it may also damage the wire if it is of the protected type, typically with a plastic coating or jacket. In this case, in fact, it may happen that said accessory rips or scratches said coating or jacket, thus exposing the exposed wire and causing further easily imaginable problems. In addition, its free ends protrude creating danger of scratches to operators working on orchards.

As an alternative to the aforementioned solutions which provide for horizontal locking elements, vertical hooks have been proposed consisting of a saddle portion adapted to rest on an arc of a circle of a stake, connected to two folds adapted to each receive a portion of a horizontal wire symmetrically with respect to the stake and on its opposite side with respect to the engagement of the saddle portion. Two straight arms then slide parallel to each other and with respect to the stake and end with two arched ends adapted to engage the stake on the same side of the saddle portion. This element is for example described in patent EP1954118.

This element solves most of the aforementioned drawbacks and allows a strong tightening of the wire on the stake. On the contrary, however, some attention is required for the application since each of the two arms and their arched ends must be handled individually and correctly. This, of course, implies a certain waste of time and fine manual skills that the operator must acquire with practice. Moreover, although this element is formed by a simple metal piece, its conformation requires a certain degree of processing which increases its production costs. Furthermore, in the case of use of stakes of material that is degradable or more easily subject to breakages such as bamboo, the element falls to the ground or is positioned incorrectly so as to be dangerous for the interventions of agricultural machines and for operators.

ITPN20100031A1 discloses a device to block a plurality of elongated members each other, comprising a wire-like body shaped as a saddle to engage a first member, and a couple of prongs selectively engageable onto said first member. The body connects to the prongs defining a couple of first housings for receiving at least a second member. At least one of said prongs comprises a portion configured to be bent around a third member to define with said saddle a second hosing for said third member. Again, said device is rather complicated to be produced and to be activated.

FR2902604 discloses a device having a branch deployed towards a top from each side of a U-shaped support post, where a lifting wire is fixed at an end of the branch. A transversal hooking and guiding unit hooks and guides the lifting wire to permit the free variation of the length of the wire. The branch is fixed on the post by a limiting, guiding and hooking unit that limits and guides the lateral and transversal displacements of the branch with respect to row of vine plants. The units are connected by a rod. It is evident that this device does not tighten a wire to a stake.

EP 1 911 346 A1 illustrates an alternative locking element.

### SUMMARY OF THE INVENTION

The technical problem underlying the present invention is therefore that of devising a locking element of horizontal metal or plastic wires on vertical stakes for implementing a support grid of plants, which is particularly cost-effective to produce. At the same time, the element should fix the metal wire to the stake in a reversible but strong manner, simply and without creating inconveniences or injuries to the operators once applied.

This problem is solved by an elastic and reversible locking element of horizontal metal or plastic wires on vertical stakes provided with such a geometry as to be assembled quickly with a few simple maneuvers even by unskilled personnel.

Therefore, a first object of the present invention is achieved with claim 1 and is an elastic and reversible locking element of horizontal metal wires on vertical stakes which is particularly handy.

A second object is a vertical locking element which is easy to assemble and which provides a tight locking without substantially protruding from the stake to which it is reversibly constrained.

A further object of the present invention is achieved with claim 8 and is a method for the reversible cross-locking of horizontal metal wires on vertical stakes comprising the use of the aforesaid locking element.

A still further object of the present invention is achieved with claims 10 and 11, and is a system for supporting rows of plants and a method for supporting plants comprising said locking element.

### BRIEF DESCRIPTION OF THE FIGURES

Further features and advantages of the cross-locking element of the horizontal metal wires on the vertical stakes for supporting a row of plants according to the invention will become apparent from the following description of an embodiment given purely by way of non-limiting example with reference to the following figures, in which:
- figure 1 shows an axonometric view of a locking element, according to the present invention;
- figures 2A-2E show a schematic view of the operating steps for assembling the locking element of figure 1, respectively;
- figure 3 is an axonometric view from a first angle of the locking element of the invention mounted on a stake to lock a metal wire;
- figure 4 shows an axonometric view from a second angle of the locking element of the invention mounted on a stake to lock a metal wire;
- figures 5A-5G show the steps of reversible locking of the element of figure 1 on a stake, respectively, according to a particular embodiment of the invention.

### DETAILED DESCRIPTION OF THE INVENTION

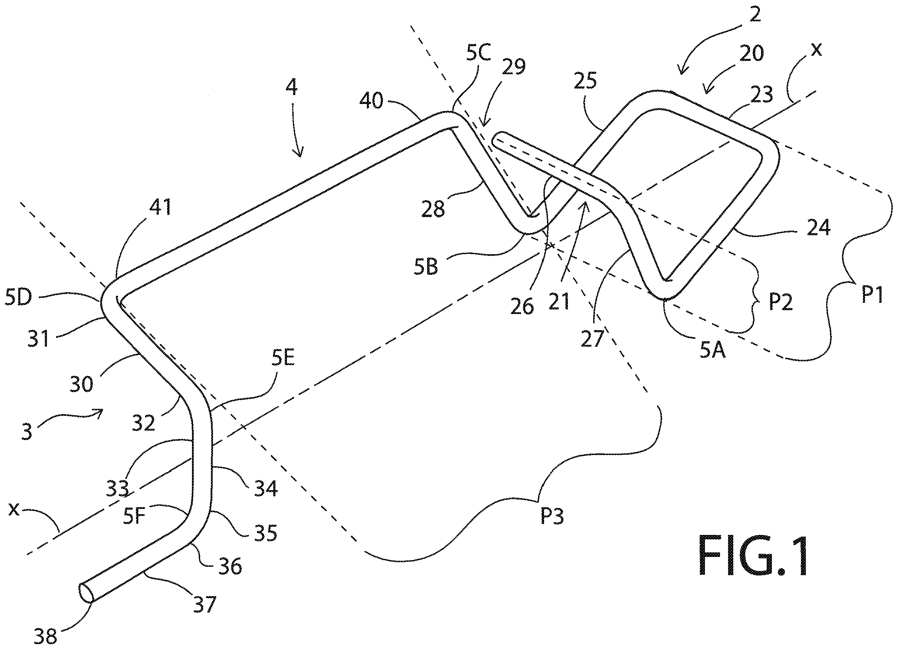

With reference to figure 1, the reference numeral 1 indicates an elastic and reversible cross-locking element of horizontal metal wires on stakes or vertical rods for supporting plants or parts of plants.

The locking element 1 consisting of a section of shaped metal wire which extends along a longitudinal axis X-X and which includes a first end 2 opposite a second end 3 through the interposition of a generally rectilinear central portion 4.

The first end 2 is generally folded to form a ring comprising a continuous first portion 20, and an interrupted second portion 21. Said first and second portions are connected to each other by means of a first fold 5A and a second fold 5B so that they lie respectively on a first plane P1 and on a second plane P2. Preferably, said first and second planes are orthogonal to each other.

The first portion 20 has a general C-shape or horseshoe shape, preferably square, with a first section 23 bridging between a second section 24 and a third section 25.

Similarly, the second portion 21 has a general C-shape or horseshoe shape, preferably square, with a first section 26 bridging between a second section 27 and a third section 28.

In particular, the first section 26 of the second portion 21 has a continuous end with the second section 27 always of the second portion 21 and said second section is in turn continuous with the second section 24 of the first portion 20 by means of one 5A of said folds. The other end of the first section 26 is preferably separated from the third section 28 of the second portion 21 by an interruption 29, while the third section 28 is continuous with the second section 25 of the first portion 20 by means of the other fold 5B. In this way, the aforementioned ring of the first end 2 is formed, preferably open. It should be noted that the first section 26 of the second portion 21 and the first section 23 of the first portion 20 are generally parallel to each other and orthogonal to the axis X-X, when they are rectilinear. When, on the other hand, they are arched, they show two respective points of contact with a stake from which respective tangents pass which are generally parallel to each other.

The central portion 4 comprises a first end 40 integral with the third section 28 of the second portion 21 of the first end 2, by means of a third fold 5C.

A second end 41 of the central portion 4, opposite the first end, is integral with the second end 3 of the locking element 1 by means of a fourth fold 5D.

The second end 3 comprises a first section 30 having a first end 31 connected to the second end 41 of the central portion 4 by means of said fourth fold 5D, and so as to form a sort of L with the same central portion. The fourth fold, then, causes the central portion 4 and the first section 30 of the second end 3 to be on a third plane P3, inclined with respect to both the first plane P1 and the second plane P2, and which generally extends parallel to the axis X-X. Said first section 30 is generally parallel to the first sections 23 and 26, respectively, of the first 20 and second 21 portions of the first end 2. If it were arched, however, it would have a point of contact with the stake crossed by a tangent generally parallel to the aforementioned tangents. In other words, all the aforementioned first sections or their tangents with the point of contact with the stake extend transversely with respect to the longitudinal axis X-X.

Furthermore, a second end 32 of the first section 30 is connected with a first end 33 of a second section 34 of the second portion 3 by means of a fifth fold 5E. The second section 34 extends inclined, preferably substantially orthogonal, with respect to the first section 30 and generally orthogonal and towards the axis X-X. In addition, the second section 34 is preferably connected with its second end 35 to a first end 36 of a third section 37 of the second portion 3 by means of a sixth fold 5F. The third section 37 then extends in a direction generally along the axis X-X and in the opposite direction with respect to the first end 2. Finally, the third section ends with a second free end 38.

The shape of the locking element 1 of the present invention as just described is such that the two first 2 and second 3 ends are on the same side of the plane P3 defined by the aforementioned L formed by the central portion 4 and by the first section 30 of the second end 3.

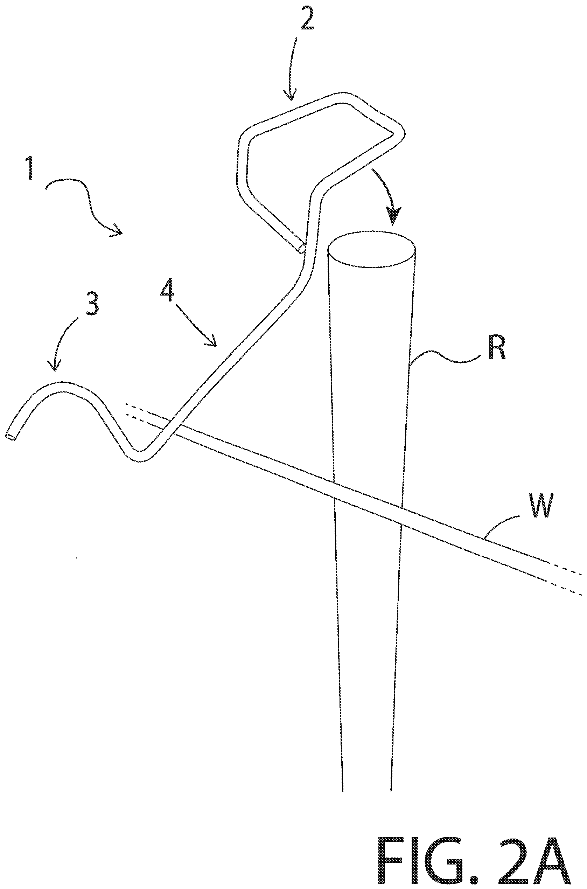

With reference to figures 2A-2E, the way of applying the locking element 1 of the present invention to a rod R or stake for plants for reversibly locking a metal or plastic wire W thereto will now be described.

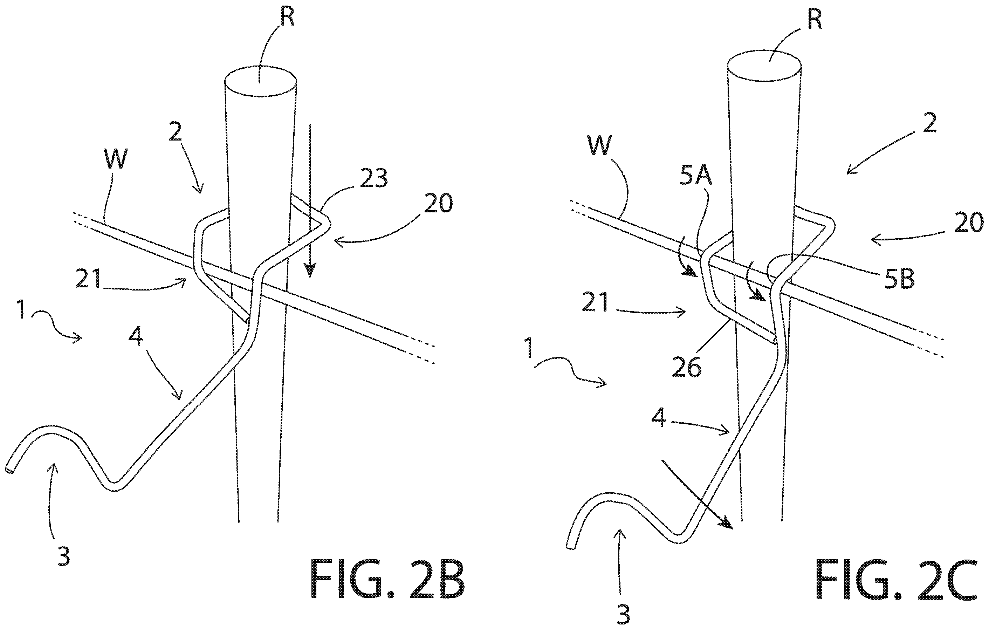

Initially, as shown in figure 2A, the locking element 1 is fitted on the stake R planted in the ground by inserting the first ring end portion 2 thereof on the stake until it reaches the wire W. At this point, the locking element is oriented on the stake so as to keep the first section 23 of the first portion 20 of the first end 2 against the wall of the stake opposite that of locking of the wire W, while the second portion 21 of the first end 2, the central portion 4 and the second end 3 are on the same side of the stake on which the wire W is located (figure 2B).

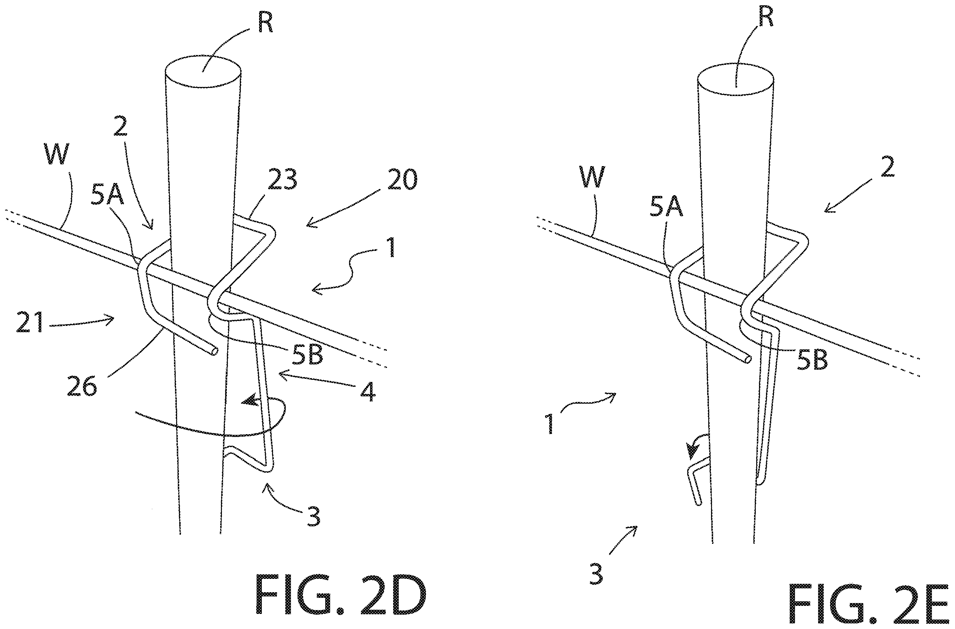

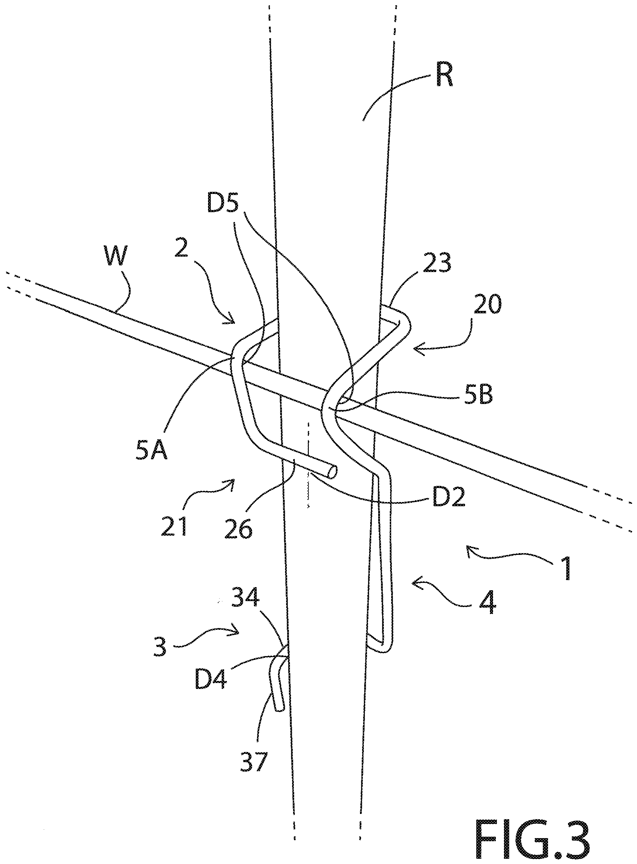

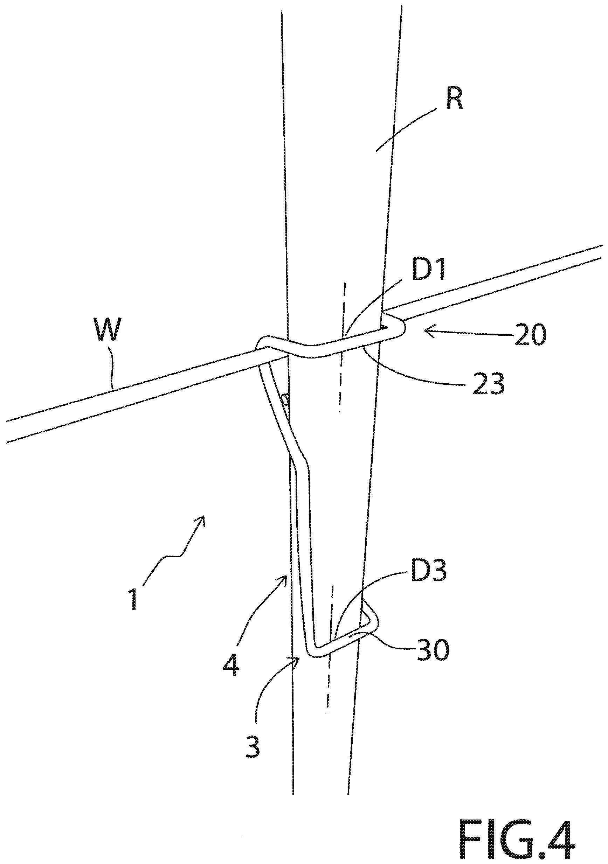

From this position, the second end 3 is pushed towards the opposite side of the stake, i.e. towards the side where the first section 23 of the first portion 20 is located (figure 2C). The first section 26 of the second portion 21 opposes this movement. By forcing the second end it is possible to bend the second end 3 and the central portion 4 slightly laterally with respect to the stake R so as to bring them to the opposite side with respect to that of the wire (figure 2D). Once the second end 3 has passed over the stake R, it is allowed to abut with its first section 30 against the stake itself (figure 2E). This operation may be advantageously carried out thanks to the elasticity of the material that makes up the locking element and thanks to three lever points (figures 3 and 4): a first point D1 is the contact between the first section 23 of the first portion 20 of the first end 2 and the stake R, a second point D2 is between the first section 26 of the second portion 21 of the first end and the stake R on the side diametrically opposite to said first point, a third point D5 is between the wire W and the first 5A and second 5B folds.

The metal wire W is therefore firmly locked crosswise on the stake R. In fact, as shown in figure 3, the recess of the first 5A and second 5B folds of the first end 2 simultaneously embrace the wire W and keep it pushed against the stake R. On the opposite side, as shown in figure 4, the first section 30 of the second end 3 abuts against the stake so as to ensure the locking of the locking element 1 on the stake itself.

Furthermore, the second section 34 of the second end 3 abuts against the stake an intermediate point (D4) between the point of contact of the wire W on the stake R and the point of contact between said first section 30 and the stake itself (figure 3). In this way, the locking element remains in its firm vertical position on the stake even when subjected to twisting caused by stresses that the wire W undergoes, for example during works on the row or on the plants.

Finally, the third section 37 of the second end portion 3 is oriented along the stake R and towards the ground so as not to leave protruding sections which may cause damage to the agricultural machinery or injure the operators (figure 3).

From what has been explained, it is evident that the locking of the wire W on the stake R by means of the locking element 1 is safe and stable thanks to three/four points of contact of the locking element itself. In fact, as described above, a first point of contact D1 is located between the first section 23 of the first portion 20 of the first end 2 and the stake R, a second point D2 is between the first section 26 of the second portion 21 of the first end and the stake R on the side diametrically opposite to said first point, a third point D3 is between the first section 30 of the second end 3 and the stake R on the same side of the first point of contact D1 (figure 4) and a possible fourth point D4 is between the second section 34 of the second end 3 and the stake R in an intermediate position between the first D1 or third D3 points of contact and the second one D2.

A further object of the present invention is, therefore, a method for the reversible cross-locking of a horizontal metal wire W on a stake or rod R by means of the locking element of the present invention.

The method comprises the following steps:
- providing a locking element 1 as described above;
- inserting the first ring end 2 on the stake R (figure 2A);
- positioning said first end so that the first 5A and second 5B folds embrace the horizontal wire W and the first section 23 of the first portion 20 of said first end is resting against the stake R on the opposite side with respect to said wire (figure 2B);
- forcing the second end 3 which is on the side of the stake on which the wire rests, towards the opposite side of the stake where said first section 23 of said first end 2 is located (figures 2C-2D);
- releasing the second end 3 once it is on said side of the stake where the first section 23 of the first end 2 is located so that the first section 30 of the second end abuts against the stake (figure 2E).

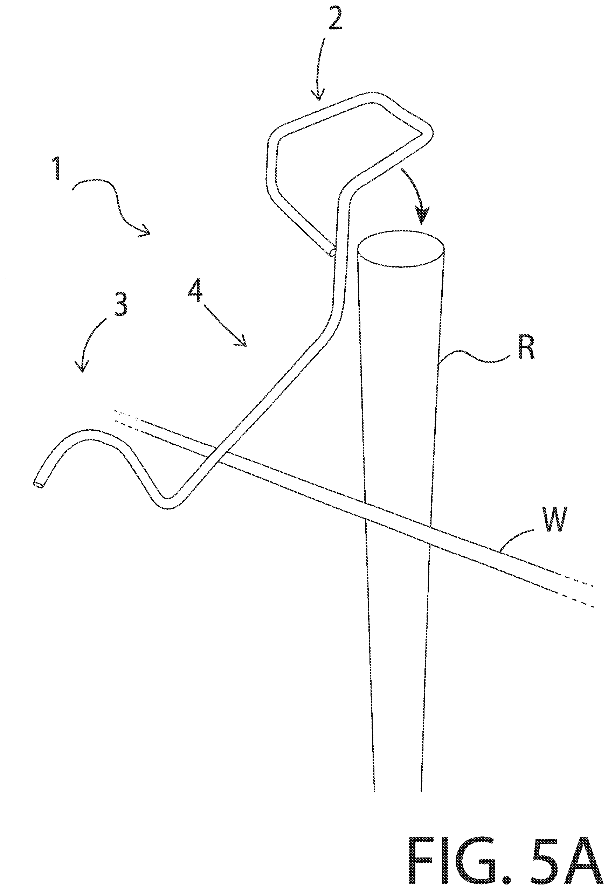

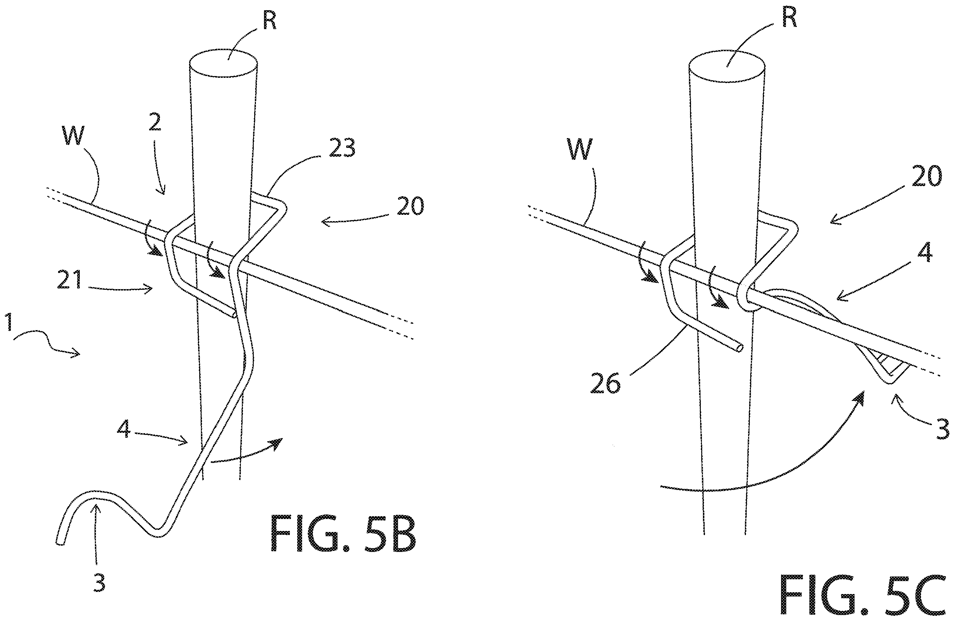

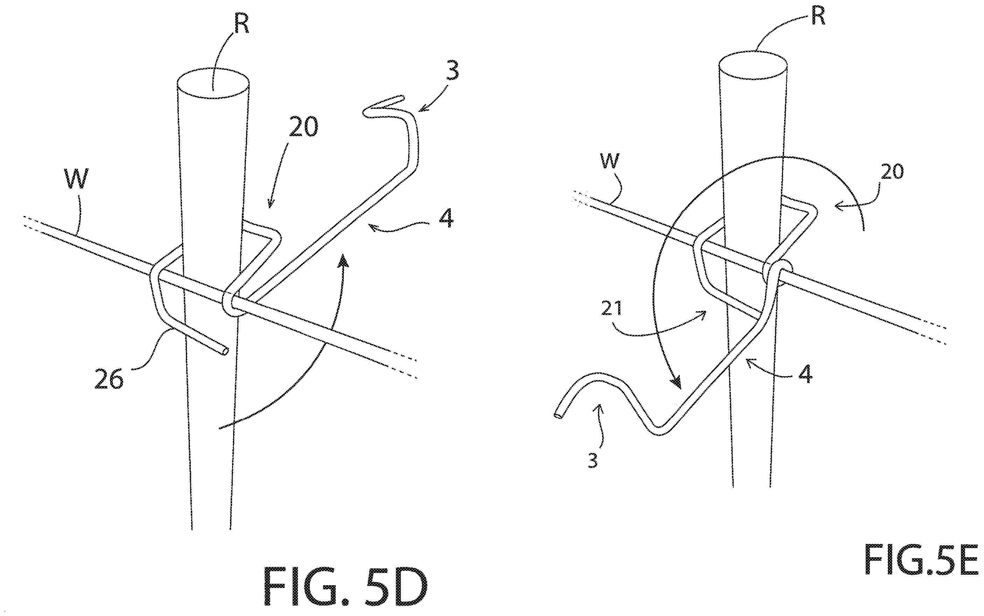

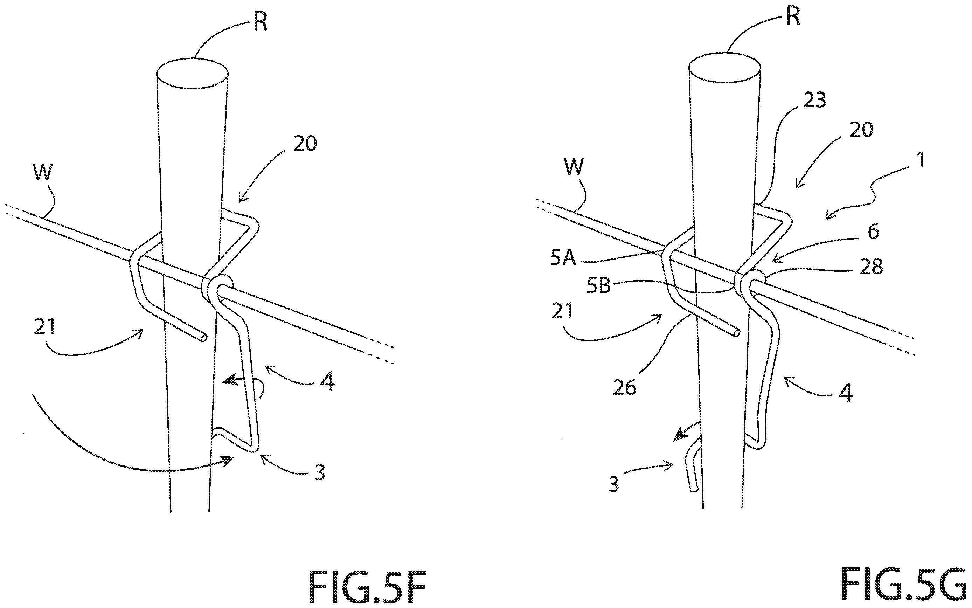

According to a particular embodiment of the invention, the method comprises a step of rotating the central portion 4 around the wire W after the above step of forcing the second end 3 so as to perform at least one complete rotation before proceeding with the above step of releasing the second end. Preferably, this rotation step takes place at the second fold 5B so as to also involve the third section 28 of the second portion 21 of the first end 2 (figures 5A-5F). In any case, at least one winding 6 is formed between said second fold 5B and third section 28 on the wire W (figure 5G).

In this way, advantageously, the element 1 is constrained to the wire W (figure 5G) and in the case of breakage and degradation of the stake R, the element 1 does not fall to the ground.

A further object of the invention consists in a method for the construction of a support grid of rows of plants comprising the steps of:
- vertically planting in a ground a plurality of stakes R of a row (not shown);
- laying at least a metal wire W horizontally along said plurality of stakes;
- reversibly locking said at least one metal wire W on said plurality of stakes R by means of a locking element as described above.

Preferably, the method comprises further steps of construction of the grid such as those described in the introductory part of the present description, i.e. for example planting head poles in the ground to attach the ends of said metal wires, laying a plurality of movable wires to support the growing part of the plant, applying elastic compensation devices of the movable wires and other steps known per se.

A further object of the invention is a system for supporting rows of plants comprising a plant support grid comprising in turn a plurality of stakes planted vertically in the ground and horizontal metal wires stretched between said stakes and there tightened by means of reversible locking elements described above.

From what has been described so far, it is clear that the drawbacks associated with the elements and devices for hooking the metal wires on the stakes according to the prior art have been overcome and, at the same time, important advantages have been achieved.

The element of the invention is in fact very simple and quick to apply since there are no laborious operations for the operator. The insertion of a ring portion on the stake and the attachment of a single arm are easy actions even without a specific tool and reduce the fixing time compared to all known devices, even to the aforementioned elements provided with two arms.

The presence of sections of the two ends of the element which provide from three to four points of contact advantageously allows greater locking and resistance against the stresses transversal to the element itself. In particular, the locking of the first section 26 of the second portion 21 of the first end 2 (second locking point D2 on the stake R) is advantageous in that it is on the opposite side with respect to the first locking point D1 and in the proximity thereto. This causes the locking force exerted by the second end on the side of the stake opposite to the locking side of the wire to encounter a corresponding force on the opposite side of the stake. This distribution of forces ensures greater fixing than all other locking elements and devices known in the sector.

In addition, the device is constructively very simple to manufacture, with an economic advantage over more complex devices.

Numerous variations to the locking elements according to the present invention may be made by the man skilled in the art, although without departing from the scope of protection of the appended claims.

For example, the section of metal wire which constitutes the locking element of the invention is preferably made of stainless steel, but it may also be made of metal alloys or iron covered with zinc.

The first ring end portion 2 may be circular or square and the two sections that compose it may lie on two different planes at different angles or according to specific needs, while maintaining the two folds to embrace the horizontal wire at least partially.

## Claims

1. Reversible elastic locking element (1) of a metal or plastic wire (W) orthogonally on a plant stake (R), consisting of a section of shaped metal wire having a longitudinal axis (X-X) and which includes a first end (2) opposite a second end (3) through the interposition of a generally rectilinear central portion (4), said first end (2) being folded to form a ring comprising a continuous first portion (20) and an interrupted second portion (21), **characterized in that** said first and second portions are connected to each other by means of a first (5A) and a second (5B) folds so that said portions lie on a first plane (P1) and on a second different plane (P2), respectively, and in such a way that said portions each comprises a respective first section (23, 26) opposite each other and adapted to create two diametrically opposite locking points (D1, D2) of the element itself on the stake (R), the recess of said first (5A) and second (5B) folds being adapted to simultaneously embrace said wire (W) and keep it pushed against said stake (R), and said second end (3) being adapted to abut with a first section (30) against said stake (R).

2. Element (1) according to claim 1, wherein each of said first (20) and second (21) portions of said first end (2) have a general horseshoe shape, preferably square, with said respective first sections (23, 26) bridging between a respective second (24, 27) and third (25, 28) section, said third section (28) of said second portion (21) being continuous with said central portion (4) by means of a third fold (5C).

3. Element (1) according to claim 2, wherein said first section (26) and said third section (28) of said second portion (21) are separated by an interruption (29).

4. Element (1) according to claim 2 or 3, wherein the central portion (4) comprises a first end (40) integral with the third section (28) of the second portion (21) of the first end (2) through said third fold (5C) and a second end (41) connected to said first section (30) of the second end (3) so that the central portion and said first section are on a third plane (P3) inclined with respect to both the first plane (P1) and to the second plane (P2), and which generally extends parallel to the axis (X-X).

5. Element (1) according to claim 4, wherein said first section (30) has a first end (31) connected to a second end (41) of the central portion (4) by means of a fourth fold (5D) so as to form a sort of L with the same central portion.

6. Element (1) according to claim 4 or 5, wherein said first section (30) has a second end (32) connected with a first end (33) of a second section (34) of the second portion (3) by means of a fifth fold (5E), the second section extending substantially orthogonal to the first section (30) and generally orthogonal and towards the axis (X-X).

7. Element (1) according to claim 6, wherein said second section (34) of the second portion (3) is connected with a second end thereof (35) to a first end (36) of a third section (37) through a sixth fold (5F), the third section (37) extending in a direction generally along the axis (X-X) and in the opposite direction with respect to the first end (2) of the element (1).

8. Method for the reversible cross-locking of a metal or plastic wire (W) horizontal on a vertical stake (R) for supporting plants, comprising the steps of: providing a locking element (1) according to any one of claims 1 to 7;
- inserting the first ring end (2) of the element on the stake (R);
- positioning said first end so that the first (5A) and second (5B) folds embrace the horizontal wire (W) and the first section (23) of the first portion (20) of said first end is resting against the stake (R) on the opposite side with respect to said wire;
- forcing the second end (3) which is on the side of the stake on which the wire rests, towards the opposite side of the stake where said first section (23) of said first end (2) is located;
- releasing the second end (3) once it is on said side of the stake where the first section (23) of the first end (2) is located so that the first section (30) of the second end abuts against the stake.

9. Method according to claim 8, comprising a step of rotating the central portion (4) of the element (1) around the wire (W) after the above step of forcing the second end (3) so as to perform at least one complete rotation before proceeding with the above step of releasing the second end.

10. Method for the construction of a support grid of rows of plants comprising the steps of:
- vertically planting in a ground a plurality of stakes (R) of a row;
- laying at least a metal or plastic wire (W) horizontally along said plurality of stakes;
- reversibly locking said at least one metal wire (W) on said plurality of stakes (R) by means of a locking element (1) according to any one of claims 1 to 7.

11. System for supporting rows of plants comprising a support grid for plants comprising in turn a plurality of substantially rigid and elongated stakes (R) planted vertically in the ground and horizontal metal or plastic wires (W) stretched between said stakes and there tightened by means of reversible locking elements (1) according to any one of claims 1 to 7.

## Patentansprüche

1. Element (1) zum umkehrbaren Arretieren eines Metall- oder Kunststoffdrahtes (W) orthogonal an einem Pflanzpfahl (R), das aus einem Teilabschnitt aus geformtem Metalldraht besteht, der eine Längsachse (X-X) hat und ein erstes Ende (2) enthält, das einem zweiten Ende (3) mit einem dazwischen befindlichen im Allgemeinen geradlinigen mittleren Abschnitt (4) gegenüberliegt, wobei das erste Ende (2) so umgebogen ist, dass es einen Ring bildet, der einen durchgehenden ersten Abschnitt (20) sowie einen unterbrochenen zweiten Abschnitt (21) umfasst, **dadurch gekennzeichnet, dass** der erste und der zweite Abschnitt mittels eines ersten Knicks (5A) sowie eines zweiten Knicks (5B) so miteinander verbunden sind, dass die Abschnitte in einer ersten Ebene (P1) bzw. einer zweiten, anderen Ebene (P2) liegen, und so, dass die Abschnitte jeweils jeweilige erste Teilabschnitte (23, 26) umfassen, die einander gegenüberliegen und so eingerichtet sind, dass sie zwei einander diametral gegenüberliegende Punkte (D1, D2) zum Arretieren des Elementes selbst an dem Pfahl (R) schaffen, wobei die Rücksprünge des ersten Knicks (5A) und des zweiten Knicks (5B) so eingerichtet sind, dass sie den Draht (W) gleichzeitig umschließen und ihn an dem Pfahl (R) gedrückt halten, und das zweite Ende (3) so eingerichtet ist, dass es mit einem ersten Teilabschnitt (30) an dem Pfahl (R) anliegt.

2. Element (1) nach Anspruch 1, wobei der erste Abschnitt (20) und der zweite Abschnitt (21) des ersten Endes (2) jeweils im allgemeinen hufeisenförmig, vorzugsweise quadratisch, sind und die jeweiligen ersten Teilabschnitte (23, 26) eine Überbrückung zwischen jeweiligen zweiten Teilabschnitten (24, 27) und dritten Teilabschnitten (25, 28) bilden, wobei der dritte Teilabschnitt (28) des zweiten Abschnitts (21) sich über einen dritten Knick (5C) an den mittleren Abschnitt (4) anschließt.

3. Element (1) nach Anspruch 2, wobei der erste Teilabschnitt (26) und der dritte Teilabschnitt (28) des zweiten Abschnitts (21) über eine Unterbrechung (29) voneinander getrennt sind.

4. Element (1) nach Anspruch 2 oder 3, wobei der mittlere Abschnitt (4) ein erstes Ende (40), das über den dritten Knick (5C) integral mit dem dritten Teilabschnitt (28) des zweiten Abschnitts (21) des ersten Endes (2) verbunden ist, sowie ein zweites Ende (41) umfasst, das so mit dem ersten Teilabschnitt (30) des zweiten Endes (3) verbunden ist,
dass der mittlere Abschnitt und der erste Teilabschnitt in einer dritten Ebene (P3) liegen, die in Bezug auf sowohl die erste Ebene (P1) als auch die zweite Ebene (P2) geneigt ist und sich im Allgemeinen parallel zu der Achse (X-X) erstreckt.

5. Element (1) nach Anspruch 4, wobei der erste Teilabschnitt (30) ein erstes Ende (31) hat, das mittels eines vierten Knicks (5D) mit einem zweiten Ende (41) des mittleren Abschnitts (4) verbunden ist und mit diesem mittleren Abschnitt eine Art "L" bildet.

6. Element (1) nach Anspruch 4 oder 5, wobei der erste Teilabschnitt (30) ein zweites Ende (32) hat, das mittels eines fünften Knicks (5E) mit einem ersten Ende (33) eines zweiten Teilabschnitts (34) des zweiten Abschnitts (3) verbunden ist, wobei sich der zweite Teilabschnitt im Wesentlichen orthogonal zu dem ersten Teilabschnitt (30) und im Allgemeinen orthogonal sowie auf die Achse (X-X) zu erstreckt.

7. Element (1) nach Anspruch 6, wobei der zweite Teilabschnitt (34) des zweiten Abschnitts (3) über einen sechsten Knick (5F) mit einem zweiten Ende (35) desselben mit einem ersten Ende (36) eines dritten Teilabschnitts (37) verbunden ist, wobei sich der dritte Teilabschnitt (37) in einer Richtung im Wesentlichen entlang der Achse (X-X) und in der entgegengesetzten Richtung in Bezug auf das erste Ende (2) des Elementes (1) erstreckt.

8. Verfahren zum umkehrbaren Arretieren eines Metall- oder Kunststoffdrahtes (W) horizontal an einem vertikalen Pfahl (R) zum Stützen von Pflanzen, das die folgenden Schritte umfasst:
- Bereitstellen eines Arretierelementes (1) nach einem der Ansprüche 1 bis 7;
- Aufstecken des ersten Ring-Endes (2) des Elementes auf den Pfahl (R);
- Positionieren des ersten Endes so, dass der erste Knick (5A) und der zweite Knick (5B) den horizontalen Draht (W) umschließen und der erste Teilabschnitt (23) des ersten Abschnitts (20) des ersten Endes an der in Bezug auf den Draht gegenüberliegenden Seite an dem Pfahl (R) anliegt;
- Drücken des zweiten Endes (3), das sich an der Seite des Pfahls befindet, an der der Draht anliegt, in Richtung der gegenüberliegenden Seite des Pfahls, an der der erste Teilabschnitt (23) des ersten Endes (2) positioniert ist;
- Freigeben des zweiten Endes (3), wenn es sich an der Seite des Pfahls befindet, an der der erste Teilabschnitt (23) des ersten Endes (2) positioniert ist, sodass der erste Teilabschnitt (30) des zweiten Endes an dem Pfahl anliegt.

9. Verfahren nach Anspruch 8, das nach dem oben erwähnten Schritt des Drückens des zweiten Endes (3) einen Schritt umfasst, in dem der mittlere Abschnitt (4) des Elementes (1) um den Draht (W) herum gedreht wird, um wenigstens eine vollständige Drehung durchzuführen, bevor mit dem oben erwähnten Schritt des Freigebens des zweiten Endes fortgefahren wird.

10. Verfahren für die Errichtung eines Stützgitters für Reihen von Pflanzen, das die folgenden Schritte umfasst:
- vertikales ein Pflanzen einer Vielzahl von Pfählen (R) einer Reihe in einen Boden;
- Verlegen wenigstens eines Metall- oder Kunststoffdrahtes (W) an der Vielzahl von Pfählen entlang;
- umkehrbares Arretieren des wenigstens einen Metalldrahtes (W) an der Vielzahl von Pfählen (R ) mittels eines Arretierelementes (1) nach einem der Ansprüche 1 bis 7.

11. System zum Stützen von Reihen von Pflanzen, das ein Stützgitter für Pflanzen umfasst, das seinerseits eine Vielzahl im Wesentlichen starrer und länglicher Pfähle (R), die vertikal in den Boden gepflanzt sind, sowie horizontale Metall- oder Kunststoffdrähte (W) umfasst, die zwischen den Pfählen gespannt sind und mit Elementen (1) zum umkehrbaren Arretieren nach einem der Ansprüche 1 bis 7 daran befestigt sind.

## Revendications

1. - Elément (1) de verrouillage élastique réversible d'un fil (W) de métal ou de matière plastique orthogonalement sur un tuteur (R) de plante, constitué d'une section de fil de métal mis en forme ayant un axe longitudinal (X-X) et qui comprend une première extrémité (2) opposée à une seconde extrémité (3) par l'interposition d'une partie centrale (4) généralement rectiligne, ladite première extrémité (2) étant pliée pour former un anneau comprenant une première partie continue (20) et une seconde partie interrompue (21), **caractérisé par le fait que** lesdites première et seconde parties sont reliées l'une à l'autre au moyen de premier (5A) et deuxième (5B) plis de telle sorte que lesdites parties se trouvent sur un premier plan (P1) et sur un deuxième plan (P2) différent, respectivement, et de telle sorte que lesdites parties comprennent chacune une première section (23, 26) respective opposée l'une à l'autre et agencées pour créer deux points de verrouillage (D1, D2) diamétralement opposés de l'élément lui-même sur le tuteur (R), l'évidement desdits premier (5A) et deuxième (5B) plis étant agencé pour simultanément accueillir ledit fil (W) et le maintenir poussé contre ledit tuteur (R), et ladite seconde extrémité (3) étant agencée pour venir en butée avec une première section (30) contre ledit tuteur (R).

2. - Élément (1) selon la revendication 1, dans lequel chacune desdites première (20) et seconde (21) parties de ladite première extrémité (2) a une forme générale de fer à cheval, de préférence carré, lesdites premières sections (23, 26) respectives formant un pont entre des deuxième (24, 27) et troisième (25, 28) sections respectives, ladite troisième section (28) de ladite seconde partie (21) étant continue avec ladite partie centrale (4) au moyen d'un troisième pli (5C).

3. - Élément (1) selon la revendication 2, dans lequel ladite première section (26) et ladite troisième section (28) de ladite seconde partie (21) sont séparées par une interruption (29).

4. - Élément (1) selon la revendication 2 ou 3, dans lequel la partie centrale (4) comprend une première extrémité (40) d'un seul tenant avec la troisième section (28) de la seconde partie (21) de la première extrémité (2) par l'intermédiaire dudit troisième pli (5C), et une seconde extrémité (41) reliée à ladite première section (30) de la seconde extrémité (3) de telle sorte que la partie centrale et ladite première section se trouvent sur un troisième plan (P3) incliné à la fois par rapport au premier plan (P1) et au deuxième plan (P2), et qui s'étend généralement parallèlement à l'axe (X-X).

5. - Élément (1) selon la revendication 4, dans lequel ladite première section (30) a une première extrémité (31) reliée à une seconde extrémité (41) de la partie centrale (4) au moyen d'un quatrième pli (5D) de façon à former une sorte de L avec cette partie centrale.

6. - Élément (1) selon la revendication 4 ou 5, dans lequel ladite première section (30) a une seconde extrémité (32) reliée à une première extrémité (33) d'une deuxième section (34) de la seconde partie (3) au moyen d'un cinquième pli (5E), la deuxième section s'étendant sensiblement orthogonalement à la première section (30) et généralement orthogonalement et en direction de l'axe (X-X).

7. - Élément (1) selon la revendication 6, dans lequel ladite deuxième section (34) de la seconde partie (3) est reliée par une seconde extrémité (35) de celle-ci à une première extrémité (36) d'une troisième section (37) par l'intermédiaire d'un sixième pli (5F), la troisième section (37) s'étendant dans une direction généralement le long de l'axe (X-X) et dans la direction opposée par rapport à la première extrémité (2) de l'élément (1).

8. - Procédé pour le verrouillage réversible d'un fil (W) de métal ou de matière plastique horizontal sur un tuteur (R) vertical pour supporter des plantes, comprenant les étapes : disposer un élément (1) de verrouillage selon l'une quelconque des revendications 1 à 7 ;
- introduire la première extrémité (2) d'anneau de l'élément sur le tuteur (R) ;
- positionner ladite première extrémité de telle sorte que les premier (5A) et deuxième (5B) plis accueillent le fil (W) horizontal et la première section (23) de la première partie (20) de ladite première extrémité repose contre le tuteur (R) sur le côté opposé par rapport audit fil ;
- forcer la seconde extrémité (3) qui se trouve sur le côté du tuteur sur lequel repose le fil, vers le côté opposé du tuteur où se trouve ladite première section (23) de ladite première extrémité (2) ;
- relâcher la seconde extrémité (3) une fois qu'elle se trouve sur le côté du tuteur où se trouve la première section (23) de la première extrémité (2), de telle sorte que la première section (30) de la seconde extrémité vient en butée contre le tuteur.

9. - Procédé selon la revendication 8, comprenant une étape de rotation de la partie centrale (4) de l'élément (1) autour du fil (W) après l'étape susmentionnée consistant à forcer la seconde extrémité (3) de façon à effectuer au moins un tour complet avant de procéder à l'étape susmentionnée consistant à relâcher la seconde extrémité.

10. - Procédé pour la construction d'une grille de support de rangées de plantes comprenant les étapes :
- planter verticalement dans un sol une pluralité de tuteurs (R) d'une rangée ;
- poser au moins un fil (W) de métal ou de matière plastique horizontalement le long de ladite pluralité de tuteurs ;
- verrouiller de manière réversible ledit au moins un fil (W) de métal sur ladite pluralité de tuteurs (R) au moyen d'un élément (1) de verrouillage selon l'une quelconque des revendications 1 à 7.

11. - Système de support de rangées de plantes comprenant une grille de support de plantes comprenant à son tour une pluralité de tuteurs (R) sensiblement rigides et allongés plantés verticalement dans le sol et des fils (W) de métal ou de matière plastique horizontaux tendus entre lesdits piquets et serrés au moyen d'éléments (1) de verrouillage réversible selon l'une quelconque des revendications 1 à 7.
